# EUROPÄISCHE PATENTSCHRIFT

(11) **EP 1 347 851 B1**
(45) Veröffentlichungstag und Bekanntmachung des Hinweises auf die Patenterteilung: **16.02.2005**
(21) Anmeldenummer: 01271271.7
(22) Anmeldetag: 06.12.2001
(51) Int. Cl.: B22D 11/06, B22D 11/128

(54) **PROFILBEEINFLUSSBARE GIESSROLLE FÜR DAS GIESSEN VON METALLBAND IN EINER GIESSROLLENANLAGE**
CASTING ROLLER WITH VARIABLE PROFILE FOR CASTING METAL STRIP IN A CASTING ROLLER PLANT
ROULEAU DE COULEE A PROFIL VARIABLE POUR COULER UN FEUILLARD METALLIQUE DANS UNE INSTALLATION A ROULEAUX DE COULEE

(30) Priorität: 21.12.2000 DE 10064342; 13.06.2001 DE 10128601
(43) Veröffentlichungstag der Anmeldung: 01.10.2003
(73) Patentinhaber: Main Management Inspiration AG, 6052 Hergiswill/NW (CH)
(72) Erfinder: EBERWEIN, Klaus-Peter, 40699 Erkrath (DE)
(74) Vertreter: Valentin, Ekkehard, Dipl.-Ing.
(86) Internationale Anmeldenummer: PCT/EP2001/014317
(87) Internationale Veröffentlichungsnummer: WO 2002/049789

(56) Entgegenhaltungen:
- EP-A- 0 342 176
- DE-A- 3 839 110
- PATENT ABSTRACTS OF JAPAN vol. 008, no. 234 (M-334), 26. Oktober 1984 (1984-10-26) & JP 59 113963 A (KAWASAKI SEITETSU KK), 30. Juni 1984 (1984-06-30)

## Beschreibung

Die Erfindung betrifft eine Gießrolle zum Gießen von Metallband im Gießspalt . zweier abstandveränderlicher, Paralleler sowie kühlbarer Gießrollen, umfassend eine Welle mit einer diese im radialen Abstand umgebenden Hülse und einem außenseitigen Mantel mit im Gießbetrieb einstellbarer Balligkeit seiner Umfangsfläche mittels hydraulischer Druckelemente sowie Mittel zum Anschließen der Druckelemente an ein externes hydraulisches Druckerzeugungssystem.

Bekannt sind Gießrollen mit Antrieben durch einen stationären Motor. Getriebe und Gelenkwelle mit drehender Welle. Ein Nachteil dieser Bauart besteht darin, dass die Auswechselbarkeit der Gießrollen nur zu einer Seite hin möglich ist, Hierzu müssen die Gießrollen vom Antriebsaggregat aufwendig entkoppelt werden.

Eine andere Bauart besteht in der Verbindung einer Gießrollenwelle mit einem Ringdrehmomentmotor, der mit stehender Achse mit der Welle einer Gießrolle mitdreht. Nachteilig bei dieser Bauart ist der relativ komplizierte Innenaufbau der Gießrolle, weiche dynamische Dichtungen für die Führung eines Kühlmittels erforderlich macht

Das Dokument EP 0 900 607 A1 beschreibt eine Gießrolle mit einem Außenmantel In Verbindung mit einer Antriebswelle. Eine Vielzahl von Einstelielementen ist innerhalb des Rallenmantels vorgesehen, um die Fasson des Außenmantels zu adjustieren. Die Antriebswelle durchdringt ein Tragelement von großem Durchmesser und ist mit dem Außenmantel mittels epizyklischer Getriebsslemente verbunden. Die Einstellelemente wirken zwischen der Innenseite des Außenmantels und dem Tragrohr, welches als primäres Konstruktionselement massiv ausgebildet ist, um die Reaktionskräfte der Einstellelemente zu absorbieren.

Das Dokument DE 197 37 117 A1 betrifft das Doppelrollengießen von Metallband, insbesondere von Eisenmetallband. Die Außenbegrenzungsflächen der Gießrollen werden durch längs veriaufende Kühlwasserdurchgänge gekühlt. Das Kühlwasser wird zu den Durchgängen jeder Walze durch Radialdurchgänge in einer Endwand der Gießrolle zugeführt und von diesen Durchgängen durch weitere Radialdurchgänge in einer entgegengesetzten Endwand der Gießrolle abgeführt. Das Kühlwasser kann in allen Längsdurchgängen der einen Gießrolle in der einen Längsrichtung und in allen Längsdurchgängen der anderen Gießrotte in die umgekehrte Längsrichtung fließen.

Das Dokument EP 0 680 795 A1 beschreibt in Walzenzapfen gelagerte Walzen für eine Einrichtung zum kontinuierlichen Gießen von metallischen Bändern. Jede Gießwalze ist mit einem äußeren Mantel aus gut wärmeleitenden Material versehen, der in einem Kühlsektor aus flüssigem Metall Erstarrungswärme ableitet, und einen mittigen, in Walzenzapfen auslaufenden Kern besitzt, wobei durch den Mantel parallel zur Walzenachse Kühlkanäle verlaufen, die mit einem Kühlmittel, insbesondere Wasser, beaufschlagt werden. An den Gießwalzen sind stimseitig Kühlmittetrohre angeordnet, die eine einstellbare Kühlmittelvertellung, auf die Kühlkanäle vornehmen.

Das Dokument EP 0 390 924 B1 beschreibt eine Vorrichtung zum kontinuierllchen Gießen eines Metalistreifens, wobei die Vorrichtung folgendes aufweist: Ein Paar innen gekühlte Gießwalzen, die sich in entgegengesetzter Richtung zueinander drehen und parallel zueinander angeordnet sind und ein Paar von Abdichtungsdämmen aus feuerfestem Material, die auf beiden Seiten des Gießwalzenpaares angeordnet sind, um zusammen mit den Umfangsoberflächen der Gießwalzen ein Gießbehältnis für das geschmolzene Metall auszubilden. Das geschmolzene Metall wird kontinuierlich durch den Walzenspalt zu einem Metallstreifen vergossen.

Das Dokument DE 199 19 354 A1 beschreibt eine Doppelwalzengießmaschine zum Gießen von Metallband mit einem Paar horizontaler Gießwalzen. Ein Paar Seitenbleche stehen im Eingriff mit den Endflächen der Gießwalzen, um seitenbegrenzte Abschlüsse für das Gießband zu bilden. Ein Paar Seitenblechhalter fixieren die Bleche und Schubvorrichtungen bringen die erforderlichen Verschlußkräfte auf die Seitenbleche auf. Die Schubvorrichtungen sind mit den Seitenblechnaltern durch Gelenkverbindungen verbunden, die durch horizontale Gelenkzapfen und vertikale Gelenkzapfen gebildet werden, um zu ermöglichen. dass sich die Seitenbleche mit den Walzenenden durch Schwenkbewegungen sowohl längs- als auch seitlich zu den Walzen selbst ausrichten, aber die Bleche an einer Drehung hindem.

Das Dokument EP 0 903 191 A2 offenbart eine Vorrichtung zum kontinuierlichen Gießen von Metallbändem, umfassend ein Paar paralleler Gießrollen, welchen Metallschmelze aufgegeben wird. Die Gießrollen sind auf Schlitten angeordnet, gleitbar auf einem Rahmen, um die Gießrollen gegeneinander und voneinander weg bewegen zu können.

Das Dokument EP 0 471 731 B1 beschreibt eine Doppelwatzen-Bandgießmaschine mit einem Paar Seitendamm-Anordnungen, die an den gegenüberliegenden Enden der Gießwalzen an diesen angrenzen, wobei jede der Seitendamm-Anordnungen einen auf einer Stützplatte getragenen Belagabschnitt aus feuerfestem Material sowie Mittel zum Oszillieren der Anordnungen aufweist. Die Belagabschnitte der Seitendamm-Anordnungen befinden sich in Kontakt mit den Enden der Gießwalzen. Die Oszilliermittel beider Anordnungen schwingen parallel zur Bandgießrichtung. während die Belagabschnitte an den Enden der Gießwalzen in Kontakt bleiben.

Das Dokument DE 33 38 692 C2 beschreibt ein Verfahren zum Stranggießen von Metallblech mit einem einen Walzspalt begrenzenden, durch eine Flüssigkeit innen gekühlten und mit dem geschlossenen Metall unmittelbar in Berührung befindlichen Paar von parallelen Gießwalzen. Die Umfangsfläche jeder Gießwalze erhält im Ausgangszustand eine negative Balligkeit. Bei Einleiten des Stranggießvorganges wird auf einen inneren Bereich jeder Walze ein Druck ausgeübt, so dass die Außenfläche beider Gießwalzen eine wahre zylindrische Gestalt annehmen. Der auf den inneren Bereich einer Gießwalze aufgebrachte Druck bei Erwärmung der Außenumfangsflächen der Gießwalzen durch geschmolzenes Metall wird bel Fortschreiten des Stranggießvorganges vermindert, so dass die Außenumfangsfläche einer jeden Gießwalze geradlinig und als wahrer Zylinder ohne jegliche Wärmeballigkeit eingehalten wird, Konstruktiv wird dies erreicht durch eine Walzenspindel, durch einen Ober der Spindel angebrachten Innenmantel, durch einen über den Innenmantel angebrachten Außenmantel mit einer negativen Balligkeit an seiner Außenumfangsfläche, sowie mit an seiner Innenumfangsfläche ausgebildeten Kühlkanälen, und durch eine an der Innenumfangsfläche des Innenmantels in seinem axial mittigen Bereich ausgebildete Hydraulikdruckkammer, die mit einer Druckflüssigkeitsquelle regelbar in Verbindung steht.

Das Dokument US 4,811,780 A offenbart eine kontinuierliche Gießvorrichtung für ein Metallband, in der ein Paar von Gießwalzen sich in entgegengesetzte Richtung zueinander drehen und die Gießwalzen jeweils Horizontalachsen aufweisen, die entgegengesetzt zueinander angeordnet sind. Ferner ist die Gießvorrichtung mit einem Paar von Seitendämmen versehen, die annähernd entsprechend der Breite des gegossenen Bandes beabstandet sind, um auf diese Weise an den Umfangsoberflächen der Gießwalzen ein Metallreservoir zu bilden. Durch den Spalt zwischen den Gießwalzen erfolgt der kontinuierliche Guß des Metallbandes aus dem geschmolzenen Metall des Metallreservoirs. Die Seitendämme sind derart angeordnet, dass mindestens ein Teil derselben die Umfangsoberfläche jeder Gießwalze kontaktiert. Die Seitendämme sind aus feuerfesten Materialien hergestellt und mit einer zufriedenstellenden Abriebfestigkeit ausgestattet. Der Umfangsoberflächenteil der Gießwalze, der den Seitendamm kontaktiert, ist mit einer rauhen Oberfläche mit Schleiffähigkeit ausgebildet.

Das Dokument DE-A-38 39 110 offenbart eine Zwilllingswalzen-Stranggleßeinrichtung zum Gießen von Metallband im Gießspalt der parallel zueinander angeordneten sowie kühlbaren Gießwalzen. Jede Gießwalze umfasst eine sie tragende Welle mit einer diese im radialen Abstand umgebenden Hülse sowie mit einem außenseitigen Mantel. Um die Balligkeit der Umfangsfläche des Außenmantels im Betrieb einstellen zu können, ist zwischen der Welle bzw. dem Walzenkörper eine Hülse mit Walzenformregelungs-Druckkammern beabstandet, die an ein externes hydraulisches Druckerzeugungssystem angeschlossen sind.

Ausgehend vom vorgenannten Stand der Technik liegt der Erfindung die Aufgabe zugrunde, den außenseitigen Mantel der den Gießspalt ausbildenden Gießrollen beim Gießprozeß derart beeinflussen zu können, dass das gegossene Band eine vorgebbare und reproduzierbare positive oder negative Balligkeit erhält Weiterhin besteht die Aufgabe darin, dass die Gießrollen-Lagerung sowie Medienanschlüsse und Antriebsanordnung ein schnelles Wechseln der Gießrollen mit kurzen Rüstzeiten ermöglicht und dass ferner die Ausbildung des Kühlmittel-Systems in der Gießrolle unterschiedliche Wärmedehnungen vollständig kompensiert.

Die Lösung der Aufgabe erfolgt bei einer Gießrolle der im Oberbegriff von Anspruch 1 genannten Art mit der Erfindung dadurch, dass zwischen Hülse und Mantel axial beabstandete radiale Kämme vorgesehen sind und dass zwischen der Hülse und den radialen Kämmen mittels Druck eines hydraulischen Mediums verformbare Bänder angeordnet sind, derart, dass diese bei ihrer Druckbeaufschlagung radiale Kraftwirkungen auf die Kämme ausüben, die ihrerseits eine Balligkeitsverformung des Mantels der Gießroile bewirken.

Durch die Anordnung von verformbaren Ringdruckbändem wird erreicht, dass die Balligkeit der Gießrollen sehr genau eingestellt werden kann, um ein gewünschtes Gießbandprofil zu erhalten. Eine erfindungsgemäß gegenläufige Kühlung des Rollenmantels verhindert eine unterschiedliche radiale Wärmeausdehnung des Rollenmantels von rechts nach links oder umgekehrt. Weiterhin wird mit dem erfindungsgemäßen Antrieb der Gießrollenwelle durch den Ringdrehmomentmotor ein schnelles Wechseln der Gießrolle ermöglicht und damit die Rüstzeiten verkürzt. Das reproduzierbare Ausmaß der Balligkeitsverformung wird nach Maßgabe der Druckhöhe im Hydraufiksystem eingestellt.

Auch ermöglicht die benötigte Druckmittelzuführung durch die Welle auf der Stirnseite, wo sich die Kühlwasserzuführung befindet, dass der Ringdrehmomentmotor auf der anderen Stirnseite der Welle angeordnet werden kann.

Weitere Einzelheiten, Merkmale und Vorteile der Erfindung ergeben sich aus der nachstehenden Erläuterung eines in der Zeichnung schematisch dargestellten Ausführungsbeispiels,

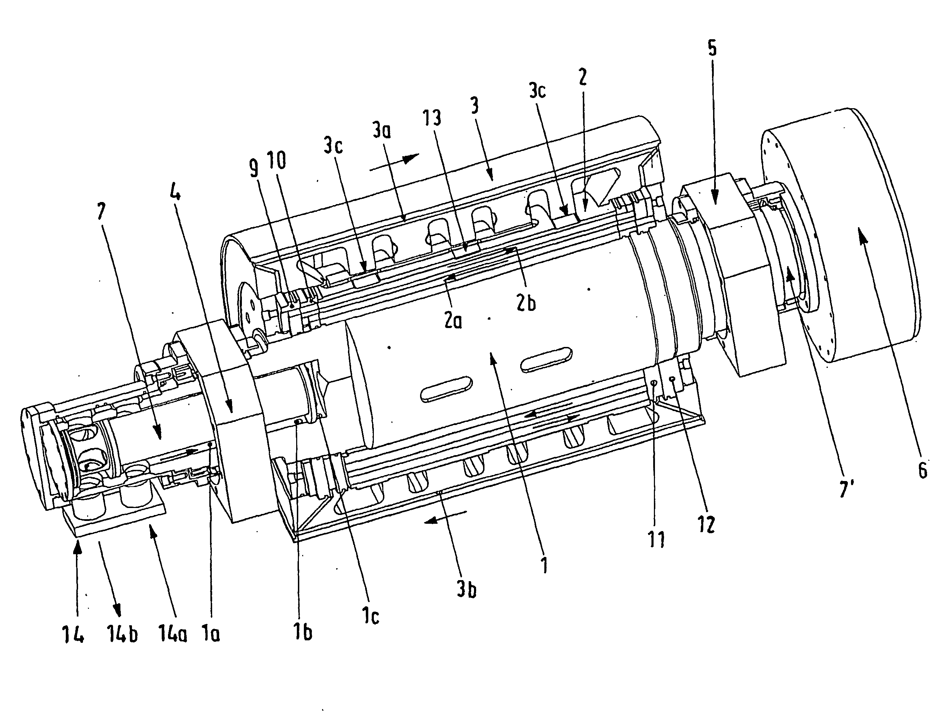

- Figur 1: zeigt in einer perspektivischen und teilweise geschnittenen Darstellung den Innenaufbau der Gießralle.

Figur 1 zeigt, dass die erfindungsgemäße Ballenprofilbeeinflussung durch hydraulisches Aufpumpen von verformbaren Bändern 13 ermöglicht wird, die zwischen der Hülse 2 und radialen Kämmen 3c ausgebildet sind. Die durch Druck verformten Bänder 13 erzeugen eine Kraft auf die Kämme 3c und verformen auf diese Weise den Ballon des Gießrollenmantels 3. Die den Gießrollenmantel 3 abstützenden radialen Kammern 3c können zumindest teilweise Hinterschneidungen aufweisen, um einen elastischeren Kräfteausgleich beim Einstellen der Balligkeit zu bewirken.

Die Schnellwechselbarkeit der Gießrolle wird durch den auf die Welle 1 aufgesetzten Ringdrehmomentmotor 6 und die Wasserzu- bzw. Wasserabführung durch die Wasserspannplatte 14 realisiert. Die für die Profilbeeinflussung des Gießrollenmantels 3 benötigte Ölzuführung erfolgt durch die Welle 1 gegenüber der Wasserzu- und Wasserabführung 14a, 14b. Damit sind die Anschlüsse für hydraulische Druckmedien und die Anschlüsse für die Wasserzu- und Wasserabführung auf ein und derselben Seite der Welle 1 angeordnet.

Die gegenläufige Durchströmung der Gießrolle mit Kühlmittel erfolgt von links nach rechts durch die Kühlbohrungen 3a.

Das Kühlwasser strömt durch die Wasserspannplatte 14a in den Raum zwischen der Bohrung 1a der Welle 1 und dem Rohr 7, weiter durch radiale Bohrungen im Wellenteil der Welle 1b, weiter durch radiale Schlitze im Ring 9, durch Kühlbohrungen 3a, durch den Schlitz 12, durch den Ring 11, durch die axialen Bohrungen 2a der aufgesetzten Hülse 2. durch den Ring 10 und die radialen Bohrungen 1c der Welle 1 sowie durch das Rohr 7. Das Kühlwasser tritt durch die Wasserspannplatte 14b wieder aus.

Durch die vorbeschriebene Anordnung der Kühlwasserführung in der Gießrolle wird erreicht, dass der zurückgelegte Weg des Kühlwassers durch die jeweilige Gießrolle für beide Strömungsrichtungen gleich ist. Damit wird die wichtige Kompensation unterschiedlicher Wärmedehnungen der Gießrolle vollständig erreicht

Die erfindungsgemäße Gießrolle ist infolge ihrer profilbeeinflußbaren Bauart mit gegenläufiger Kühlmittel-Durchströmung und der Schnellwechselausführung außerordentlich vorteilhaft geeignet für den Einsatz in einer Bandgießanlage mit Gießrollen.

## Patentansprüche

1. Gießralle zum Gießen von Metallband im Gießspalt zweier abstandsveränderlicher, paralleler sowie kühlbarer Gießrollen, umfassend eine Welle (1) mit einer diese im radialen Abstand umgebenden Hülse (2) und einem außenseitigen Mantel (3) mit im Gießbetrieb einstellbarer Balligkeit seiner Umfangsfläche mittels hydraulischer Druckelemente sowie Mittel zum Anschließen der Druckelemente an ein externes hydraulisches Druckerzeugungssystem.
**dadurch gekennzeichnet,**
**dass** zwischen Hülse (2) und Mantel (3) axial beabstandete radiale Kämme (3c) vorgesehen sind und dass zwischen der Hülse (2) und den radialen Kämmen (3c) mittels Druck eines hydraulischen Mediums verformbare Bänder (13) angeordnet sind, derart, dass diese bei ihrer Druckbeaufschlagung radiale Kraftwirkungen auf die Kämme (3c) ausüben, die ihrerseits eine Balligkeitsverformung des Mantels (3) der Gießrolle bewirken.

2. Gießrolle nach Anspruch 1,
**dadurch gekennzeichnet,**
**dass** für die Gießrolle eine Lagerung mit fest- und losseitigen, auf stirnseitigen Wellenzapfen (7, 7') angeordneten Einbaustücken (4, 5) vorgesehen ist

3. Gießrolle nach Anspruch 1 oder 2,
**gekennzeichnet durch,**
eine Antriebsvorrichtung in Form eines Ringdrehmamentmotors (6) In drehfester Verbindung mit dem der Kühlmedienzu- und Kühlmedienabfuhr (14a, 14b) entgegengesetzt angeordneten Wellenzapfen (7).

4. Gießrolle nach einem oder mehreren der Ansprüche 1 bis 3,
**dadurch gekennzeichnet,**
**dass** die Gießrolle (1) axial-gegenläufig durchströmbare Kühlmittelbohrungen (2a, 2b; 3a, 3b) besitzt, die durch radiale Bohrungen (1a. 1b) bzw. radiale Schlitze In Ringen (9, 10; 11, 12) miteinander in DurchflußVerbindung stehen.

5. Gießrolle nach Anspruch 4,
**dadurch gekennzeichnet,**
**dass** die Kühlmittelbohrungen (2a, 2b; 3a, 3b) durch die jeweilige Gießrolle für beide Strömungsrichtungen gleich lang bemessen sind.

6. Gießrolle nach einem oder mehreren der Ansprüche 1 bis 5,
**dadurch gekennzeichnet,**
**dass** ein Anschlußorgan für je einen Zu- und Abfluß (14a, 14b) von Kühlwasser eines Kühiwasserdurchtaufsystems in Form einer Spannplatte (14) vorgesehen ist.

7. Gießrolle nach einem oder mehreren der Ansprüche 1 bis 6,
**dadurch gekennzeichnet,**
**dass** die für die Verformung der Bänder (13) benötigte Druckölzuführung mit einem Anschlußorgan versehen ist, das gegenüberliegend der Kühlwasserzuführung im Bereich des einen Wellenzapfens (7) angeordnet ist.

8. Gießrolle nach einem oder mehreren der Ansprüche 1 bis 7,
**dadurch gekennzeichnet,**
**dass** der Mantel (3) und die Kämme (3c) ein Bauteil sind.

## Claims

1. Casting roll for casing metal strips in a casting gap between variably spaced, parallel and coolable casting rollers, comprising a shaft (1) with a sleeve (2) enveloping it at a radial distance and an outer jacket (3) whose circumferential surface convexity can be adjusted in casting operations by hydraulic pressure elements, and means for connecting the pressure elements to an external hydraulic pressure generating system, **characterized in that** axially spaced, radial combs (3c) are provided between the sleeve (2) and jacket (3), and that strips (13) that can be deformed by pressure from a hydraulic medium are arranged between the sleeve (2) and radial combs (3c) in such a way that as to exert radial forces on the combs (3c) when exposed to pressure, which in turn deform the convexity of the jacket (3) of the casting roll.

2. Casting roll according to claim 1, **characterized in that** the casting roll is provided with a bearing with fixed and loose inserts (4, 5) arranged on front shaft journals (7, 7').

3. Casting roll according to claim 1, **characterized by** a driving mechanism in the form of an annular torque motor (6) rigidly connected with the shaft journals (7) arranged opposite the cooling medium inlet and outlet (14a, 14b).

4. Casting roll according to one or more of claims 1 to 3, **characterized in that** the casting roll (1) coolant holes (2a, 2b; 3a, 3b) that can carry an axially opposing flow, which are linked in terms of flow by radial holes (1a, 1 b) or radial slits in rings (9, 10; 11, 12).

5. Casting roll according to claim 1, **characterized in that** the coolant holes (2a, 2b; 3a, 3b) through the respective casing roll are equally long for both flow directions.

6. Casting roll according to one or more of claims 1 to 5, **characterized in that** a connecting element is provided for a cooling water inlet and outlet (14a, 14b) of a cooling water circulation system in the form of a clamping plate (14).

7. Casting roll according to one or more of claims 1 to 6, **characterized in that** the compressed oil feed required for deforming the strips (13) is provided with a connecting element arranged opposite the cooling water supply in the area of the one shaft journal (7).

8. Casting roll according to one or more of claims 1 to 7, **characterized in that** the jacket (3) and combs (3c) are a single component.

## Revendications

1. Rouleau de coulée pour couler un feuillard métallique dans la fente de coulée de deux rouleaux de coulée séparés par un espace, parallèles ainsi que refroidissables, comprenant un arbre (1) comportant une douille (2) entourant ce dernier à une distance radiale et un couvercle (3) extérieur présentant une convexité réglable lors du processus de coulée au moyen d'éléments de pression hydraulique ainsi que d'un moyen pour connecter les éléments de pression à un système de génération de pression hydraulique externe,
**caractérisé en ce que** des peignes radiaux (3c) espacés axialement sont prévus entre la douille (2) et le couvercle (3) et **en ce que** des bandes (13) déformables au moyen de la pression d'une matière hydraulique sont disposées entre la douille (2) et les peignes radiaux (3c), de telle sorte que ces dernières lors de leurs impacts de pression exercent une force radiale sur les peignes (3c), lesquels de leur côté provoquent une déformation de la convexité du couvercle (3) des rouleaux de coulée.

2. Rouleau de coulée selon la revendication 1, **caractérisé en ce que**, pour le rouleau de coulée, un palier est prévu, comportant des pièces de montage (4,5) fixables et démontables disposées sur des réducteurs planétaires (7,7') du côté avant.

3. Rouleau de coulée selon la revendication 1 ou 2, **caractérisé par** un dispositif d'entraînement sous la forme d'un moteur-couple cyclique (6) en relation résistante au couple avec les réducteurs planétaires (7) disposés en opposition par rapport aux conduites d'amenée et d'évacuation de la matière de refroidissement (14a,14b).

4. Rouleau de coulée selon une ou plusieurs des revendications 1 à 3, **caractérisé en ce que** le rouleau de coulée (1) possède des alésages de refroidissement (2a,2b ; 3a,3b) à travers lesquels la matière de refroidissement s'écoule dans une direction axiale contraire, lesquels sont connectés les uns aux autres de manière à permettre l'écoulement par des alésages radiaux (1a,1b), respectivement des fentes radiales dans des rondelles (9,10;11,12).

5. Rouleaux de coulée selon la revendication 4, **caractérisés en ce que** les alésages de refroidissement (2a,2b; 3a,3b) ont des proportions similaires sur le rouleau de coulée respectif pour les deux directions d'écoulement.

6. Rouleaux de coulée selon une ou plusieurs des revendications 1 à 5, **caractérisés en ce qu'**un élément de connexion est prévu sous la forme d'une plaque de fixation (14) pour chaque conduite d'amenée et d'évacuation (14a,14b) d'eau de refroidissement d'un système de circulation d'eau de refroidissement.

7. Rouleaux de coulée selon une ou plusieurs des revendications 1 à 6, **caractérisés en ce que** la conduite d'amenée d'huile sous pression nécessaire pour déformer les bandes (13) est pourvue d'un élément de connexion, lequel est disposé au dessus de la conduite d'amenée d'eau de refroidissement au niveau d'un des réducteurs planétaires (7).

8. Rouleau de coulée selon une ou plusieurs des revendications 1 à 7, **caractérisé en ce que** les peignes (3c) sont intégrés au couvercle (3).
